# FASCICULE DE BREVET EUROPEEN

(11) **EP 2 130 745 B1**
(45) Date de publication et mention de la délivrance du brevet: **23.03.2011**
(21) Numéro de dépôt: 09159974.6
(22) Date de dépôt: 12.05.2009
(51) Int. Cl.: B62D 25/04, B62D 27/02

(54) **Doublure de pied central pour véhicule automobile et véhicule automobile dont chacun des pieds centraux comporte une telle doublure**
Versteifung des zentralen Fußes für Kraftfahrzeug und Kraftfahrzeug, bei dem jeder der zentralen Füße eine solche Versteifung besitzt
Centre pillar liner for an automobile and automobile in which each of the centre pillars comprises such a liner

(30) Priorité: 05.06.2008 FR 0853704
(43) Date de publication de la demande: 09.12.2009
(73) Titulaire: Peugeot Citroën Automobiles SA, 78140 Vélizy-Villacoublay (FR)
(72) Inventeur: Leroux, Stéphane, 92100 Boulogne Billancourt (FR)
(74) Mandataire: Allain, Laurent

(56) Documents cités:
- EP-A- 1 632 422
- CA-A1- 2 569 999
- FR-A- 2 908 729

## Description

La présente invention concerne une doublure de pied central pour véhicule automobile et un véhicule automobile dont chacun des pieds centraux comporte une telle doublure.

La figure 1 est une vue en plan montrant du côté de l'habitacle du véhicule, une partie de la caisse de ce véhicule, comportant un pied central 1 s'étendant entre un longeron 2 du soubassement et le pavillon 3.

La figure 2 est une vue en perspective partielle montrant la doublure connue d'un pied central constituée par une pièce en tôle emboutie présentant la forme générale d'une cuvette allongée comportant des parois latérales 5, 6 et une paroi d'extrémité 7 repliées par rapport à une paroi 8 formant le fond de la cuvette.

La paroi d'extrémité 7 est destinée à être soudée au soubassement de la caisse du véhicule.

La paroi 8 formant le fond de la cuvette comporte un évidement 9 destiné à recevoir un enrouleur 10 de ceinture de sécurité 10a et des moyens sont prévus pour fixer cet enrouleur 10 de ceinture de sécurité à la doublure de pied central 4.

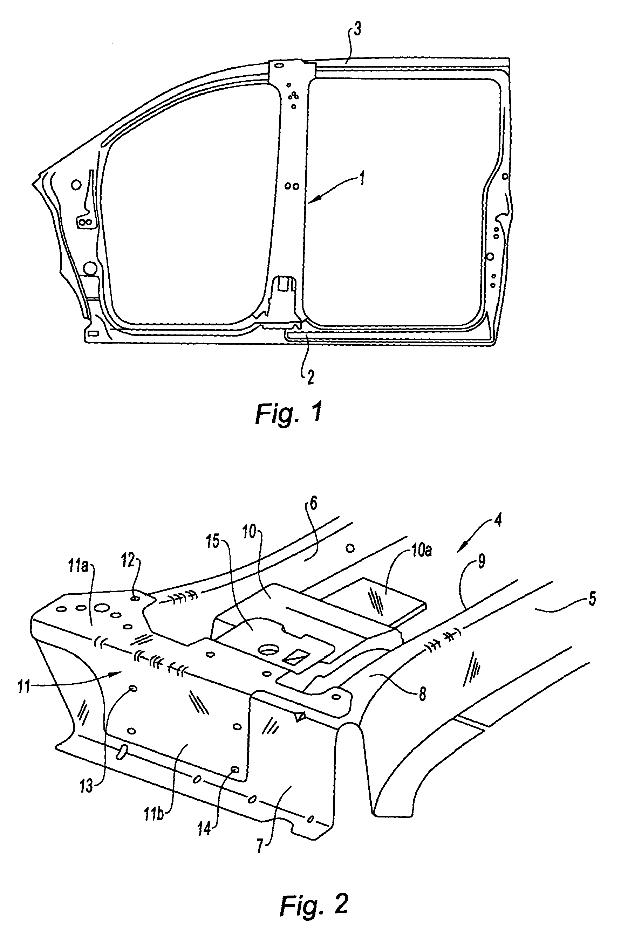

De façon connue, les moyens pour fixer l'enrouleur 10 de ceinture de sécurité comprennent (voir figure 2) un renfort en tôle 11 en forme d'équerre dont une partie 11 a recouvre la paroi 8 de la doublure et une partie 11 b recouvre la paroi d'extrémité 7 destinée à être soudée au longeron.

Ce renfort de tôle 11 est soudé aux parois 7 et 8 par de nombreux points de soudure tels que 12, 13, 14.

L'enrouleur de ceinture de sécurité 10 est fixé à une partie 15 du renfort 11.

L'inconvénient du renfort en tôle 11 est que celui-ci représente une pièce supplémentaire à fixer par soudure à la doublure 4 de pied central, ce qui augmente les coûts de fabrication

Le but de la présente invention est de remédier à cet inconvénient.

Ce but est atteint selon l'invention, grâce à une doublure de pied central pour véhicule automobile constituée par une pièce en tôle emboutie présentant la forme générale d'une cuvette allongée comportant des parois latérales et une paroi d'extrémité repliées par rapport à une paroi formant le fond de ladite cuvette, ladite paroi d'extrémité étant destinée à être soudée au soubassement de la caisse du véhicule, ladite paroi formant le fond de ladite cuvette comportant un évidement destiné à recevoir un enrouleur de ceinture de sécurité, des moyens étant prévus pour fixer cet enrouleur de ceinture de sécurité à la doublure de pied central, caractérisée en ce que lesdits moyens sont constitués par une partie en tôle découpée directement dans la doublure de pied central.

On évite ainsi grâce à l'invention, les coûts représentés par la fabrication et le montage du renfort en tôle évoqué plus haut.

De préférence, ladite partie en tôle est découpée dans la paroi formant le fond de ladite cuvette et s'étend sensiblement dans le plan de l'évidement destiné à recevoir l'enrouleur de ceinture de sécurité.

Dans un mode de réalisation avantageux de l'invention, ladite partie en tôle est constituée par une plaque faisant saillie sur un bord de l'évidement proche du pli de ladite paroi d'extrémité.

De préférence également, ladite partie en tôle comporte des trous pour la fixation de l'enrouleur de ceinture de sécurité.

Pour augmenter la raideur de ladite partie en tôle, celle-ci comporte de préférence un repli formé sur chacun de ses deux bords longitudinaux.

De préférence, ledit repli s'étend à partir de la base de ladite partie en tôle sur une partie de chacun de ses deux bords longitudinaux

Selon une autre particularité de l'invention, ladite partie en tôle comprend en outre un pli transversal, de sorte qu'une partie de ladite partie en tôle s'étend légèrement sous le plan de l'évidement.

L'invention concerne également un véhicule dont la caisse comporte deux pieds centraux, chacun de ceux-ci comportant une doublure selon l'invention, ladite paroi d'extrémité étant directement soudée au soubassement de la caisse, sans renfort intermédiaire.

D'autres particularités et avantages de l'invention apparaîtront encore tout au long de la description ci-après.

Aux dessins annexés, donnés à titre d'exemples, non limitatifs :
- la figure 1 est une vue latérale partielle de la caisse d'un véhicule automobile,
- la figure 2 est une vue en perspective partielle d'une doublure de pied central portant un renfort de tôle connu pour fixer un enrouleur de ceinture de sécurité,

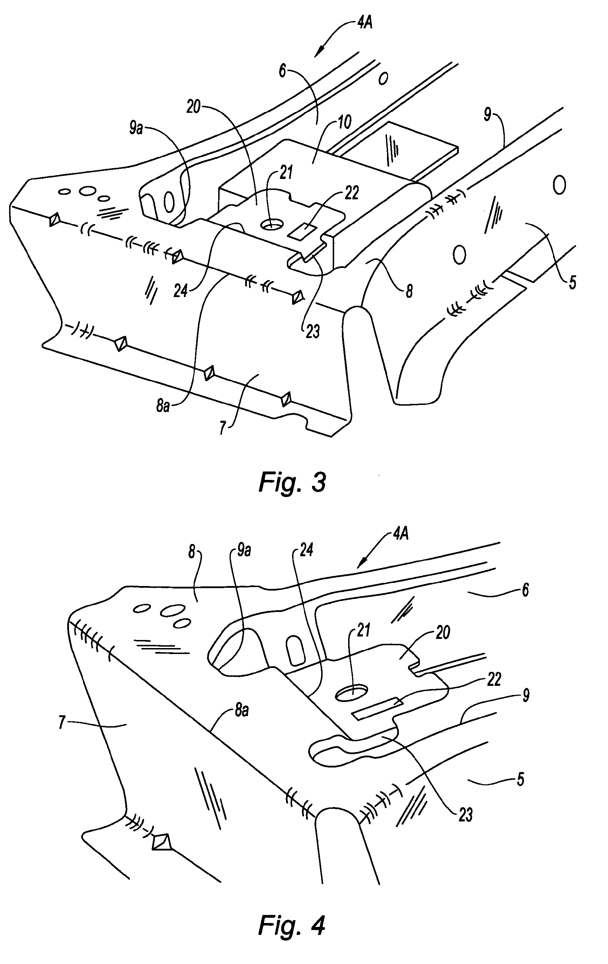

- la figure 3 est une vue analogue à la figure 2, montrant une doublure de pied central selon l'invention-dont la plaque découpée sert à la fixation d'un enrouleur de ceinture de sécurité,
- la figure 4 est une vue en perspective agrandie d'une partie de la doublure de pied central selon l'invention.

La doublure de pied central 4A représentée sur les figures 3 et 4 diffère de celle représentée sur la figure 2 essentiellement par le fait que selon l'invention, la doublure 4A est dépourvue de renfort en tôle pour fixer l'enrouleur 10 de ceinture de sécurité.

Sur ces figures 3 et 4, les parties identiques à celles de la figure 2 sont désignées par les mêmes références numériques.

Sur ces figures, les moyens pour fixer l'enrouleur 10 de la ceinture de sécurité 10a sont constitués par une partie en tôle 20 découpée directement dans la doublure de pied central 4A.

Comme montré sur les figures 3 et 4, la partie en tôle 20 est découpée dans la paroi 8 formant le fond de la cuvette et s'étend sensiblement dans le plan de l'évidement 9 destiné à recevoir l'enrouleur 10 de ceinture de sécurité 10a.

Par ailleurs, la partie en tôle 20 est constituée par une plaque faisant saillie sur un bord 9a de l'évidement 9 proche du pli 8a de la paroi d'extrémité 7.

De plus, la partie en tôle 20 comporte des trous 21, 22 pour la fixation de l'enrouleur 10 de ceinture de sécurité.

Les figures 3 et 4 montrent d'autre part que la partie en tôle 20 comporte un repli 23 formé sur chacun de ses deux bords longitudinaux, destiné à augmenter la raideur de cette partie en tôle.

Ce repli 23 s'étend à partir de la base de la partie en tôle 20 sur une partie de chacun de ses deux bords longitudinaux.

Par ailleurs, la partie en tôle 20 comprend un pli transversal 24, de sorte qu'une partie de la partie en tôle 20 s'étend légèrement sous le plan de l'évidement 9.

En l'absence d'un renfort en tôle, tel que celui représenté sur la figure 2, la paroi d'extrémité - de la doublure 4A peut être soudée directement au soubassement de la caisse ou au longeron.

L'invention permet ainsi de faire une économie de main d'oeuvre, d'outillage et de pièces.

## Revendications

1. Doublure (4A) de pied central pour véhicule automobile constituée par une pièce en tôle emboutie présentant la forme générale d'une cuvette allongée comportant des parois latérales (5, 6) et une paroi d'extrémité (7) repliées par rapport à une paroi (8) formant le fond de ladite cuvette, ladite paroi d'extrémité (7) étant destinée à être soudée au soubassement de la caisse du véhicule, ladite paroi (8) formant le fond de ladite cuvette comportant un évidement (9) destiné à recevoir un enrouleur (10) de ceinture de sécurité, des moyens étant prévus pour fixer cet enrouleur (10) de ceinture de sécurité à la doublure de pied central (4A), **caractérisée en ce que** lesdits moyens sont constitués par une partie en tôle (20) découpée directement dans la doublure de pied central.

2. Doublure de pied central selon la revendication 1, **caractérisée en ce que** ladite partie en tôle (20) est découpée dans la paroi (8) formant le fond de ladite cuvette et s'étend sensiblement dans le plan de l'évidement (9) destiné à recevoir l'enrouleur (10) de ceinture de sécurité.

3. Doublure de pied central selon la revendication 2, **caractérisée en ce que** ladite partie en tôle (20) est constituée par une plaque faisant saillie sur un bord (9a) de l'évidement (9) proche du pli (8a) de ladite paroi d'extrémité (7).

4. Doublure de pied central selon l'une des revendications 1 à 3, **caractérisée en ce que** ladite partie en tôle (20) comporte des trous (21, 22) pour la fixation de l'enrouleur (10) de ceinture de sécurité.

5. Doublure de pied central selon l'une des revendications 1 à 4, **caractérisée en ce que** ladite partie en tôle (20) comporte un repli (23) formé sur chacun de ses deux bords longitudinaux.

6. Doublure de pied central selon la revendication 5, **caractérisée en ce que** ledit repli (23) s'étend à partir de la base de ladite partie en tôle (20) sur une partie de chacun de ses deux bords longitudinaux.

7. Doublure de pied central selon l'une des revendications 1 à 6, **caractérisée en ce que** ladite partie en tôle (20) comprend en outre un pli transversal (24), de sorte qu'une partie de ladite partie en tôle (20) s'étend légèrement sous le plan de l'évidement (9).

8. Véhicule automobile dont la caisse comporte deux pieds centraux, chacun de ceux-ci comportant une doublure (4A) selon l'une des revendications 1 à 7, **caractérisée en ce que** ladite paroi d'extrémité (7) de la doublure est directement soudée au soubassement de la caisse, sans renfort intermédiaire.

## Claims

1. Motor vehicle central post liner (4A) consisting of a part made of buckled sheet having the general shape of an elongated trough comprising lateral walls (5, 6) and one end wall (7) folded back in relation to a wall (8) providing the base of said trough, said end wall (7) being intended to be welded to the underframe of the vehicle body, said wall (8) providing the base of said trough comprising a recess (9) for receiving a safety belt roller (10), means being provided for attaching said safety belt roller (10) to the central post liner (4A), **characterised in that** said means consist of a portion made of sheet metal (20) cut directly out of the central post liner.

2. Central post liner according to claim 1, **characterised in that** said portion made of sheet metal (20) is cut out of the wall (8) providing the base of said trough and extends substantially in the plane of the recess (9) for receiving the safety belt roller (10).

3. Central post liner according to claim 2, **characterised in that** said portion made of sheet metal (20) consists of a plate projecting onto an edge (9a) of the recess (9) near the bend (8a) of said end wall (7).

4. Central post liner according to any of claims 1 to 3, **characterised in that** said portion made of sheet metal (20) comprises holes (21, 22) for attaching the safety belt roller (10).

5. Central post liner according to any of claims 1 to 4, **characterised in that** said portion made of sheet metal (20) comprises a fold (23) formed on each of the two longitudinal edges thereof.

6. Central post liner according to claim 5, **characterised in that** said fold (23) extends from the base of said portion made of sheet metal (20) onto a portion of each of the two longitudinal edges thereof.

7. Central post liner according to any of claims 1 to 6, **characterised in that** said portion made of sheet metal (20) further comprises a transverse fold (24), such that a portion of said portion made of sheet metal (20) extends slightly below the plane of the recess (9).

8. Motor vehicle wherein the body comprises two central posts, each comprising a liner (4A) according to any of claims 1 to 7, **characterised in that** said end wall (7) of the liner is welded directly to the underframe of the vehicle body, with no intermediate reinforcement.

## Patentansprüche

1. Einlage (4A) einer B-Säule für ein Kraftfahrzeug, die von einem tiefgezogenen Blechteil gebildet wird, der die allgemeine Form einer langgezogenen Wanne aufweist, die Seitenwände (5, 6) und eine Endwand (7) umfasst, die in Bezug zu einer Wand (8), die den Boden der Wanne bildet, gebogen sind, wobei die Endwand (7) dazu bestimmt ist, an den Unterbau des Fahrzeugaufbaus geschweißt zu werden, wobei die Wand (8), die den Boden der Wanne bildet, eine Aussparung (9) umfasst, die dazu bestimmt ist, einen Aufroller (10) eines Sicherheitsgurtes aufzunehmen, wobei Mittel vorgesehen sind, um diesen Aufroller (10) des Sicherheitsgurtes an der Einlage der B-Säule (4A) zu befestigen, **dadurch gekennzeichnet, dass** die Mittel von einem Blechteil (20) gebildet werden, der direkt in der Einlage der B-Säule zugeschnitten wird.

2. Einlage einer B-Säule nach Anspruch 1, **dadurch gekennzeichnet, dass** der Blechteil (20) in der Wand (8), die den Boden der Wanne bildet, zugeschnitten wird und sich im Wesentlichen in der Ebene der Aussparung (9) erstreckt, die dazu bestimmt ist, den Aufroller (10) des Sicherheitsgurtes aufzunehmen.

3. Einlage einer B-Säule nach Anspruch 2, **dadurch gekennzeichnet, dass** der Blechteil (20) von einer Platte gebildet wird, die von einem Rand (9a) der Aussparung (9) hervorspringt, der sich nahe dem Knick (8a) der Endwand (7) befindet.

4. Einlage einer B-Säule nach einem der Ansprüche 1 bis 3, **dadurch gekennzeichnet, dass** der Blechteil (20) Öffnungen (21, 22) für die Befestigung des Aufrollers (10) des Sicherheitsgurtes aufweist.

5. Einlage einer B-Säule nach einem der Ansprüche 1 bis 4, **dadurch gekennzeichnet, dass** der Blechteil (20) eine Falte (23) aufweist, die an jedem seiner zwei Längsränder ausgebildet ist.

6. Einlage einer B-Säule nach Anspruch 5, **dadurch gekennzeichnet, dass** sich die Falte (23) ausgehend von der Basis des Blechteils (20) auf einem Teil von jedem seiner zwei Längsränder erstreckt.

7. Einlage einer B-Säule nach einem der Ansprüche 1 bis 6, **dadurch gekennzeichnet, dass** der Blechteil (20) darüber hinaus eine Querfalte (24) umfasst, sodass sich ein Teil des Blechteils (20) leicht unterhalb der Ebene der Aussparung (9) erstreckt.

8. Kraftfahrzeug, dessen Aufbau zwei B-Säulen umfasst, wobei jede der beiden eine Einlage (4A) nach einem der Ansprüche 1 bis 7 umfasst, **dadurch gekennzeichnet, dass** die Endwand (7) der Einlage direkt und ohne Zwischenverstärkung an den Unterbau des Aufbaus geschweißt ist.
